# EUROPÄISCHE PATENTANMELDUNG

(11) **EP 1 657 091 A2**
(43) Veröffentlichungstag der Anmeldung: **17.05.2006**
(21) Anmeldenummer: 05023635.5
(22) Anmeldetag: 28.10.2005
(51) Int. Cl.: B60H 1/34

(54) **Lüftungsdüse für einen Lüftungsschacht in einem Kraftfahrzeug**

(30) Priorität: 12.11.2004 DE 102004054696
(71) Anmelder: GM Global Technology Operations, Inc., Detroit, MI 48265-3000 (US)
(72) Erfinder: Bald, Heiko, 64397 Modautal (DE)
(74) Vertreter: Daniel, Ulrich W.P.

(57) **Zusammenfassung**

Die vorliegende Erfindung betrifft eine Lüftungsdüse für einen Lüftungsschacht in einem Kraftfahrzeug mit einem Düsengehäuse (6) mit einer einlassseitigen und einer auslassseitigen Öffnung (8; 10). Das Düsengehäuse (6) kann an dem Lüftungsschacht (12) angebracht werden. Erfindungsgemäß ist ein um die auslassseitige Öffnung (10) rotierbares, ringförmiges Stellglied (16) zum Einstellen einer anderen steuerbaren Fahrzeugkomponente vorgesehen. Auf diese Weise wird die Lüftungsdüse (4) in platzsparender Weise mit dem Stellglied (16) für eine andere Fahrzeugkomponente kombiniert, so dass dieses Stellglied keinen weiteren Platz auf dem Armaturenbrett (2) benötigt. Somit ist auch eine größere Übersichtlichkeit des Armaturenbrettes (2) o.ä. gegeben.

## Beschreibung

Die Erfindung bezieht sich auf Lüftungsdüse für einen Lüftungsschacht in einem Kraftfahrzeug mit einem an dem Lüftungsschacht anbringbaren Düsengehäuse mit einer einlassseitigen und einer auslassseitigen Öffnung.

Aus dem Stand der Technik sind unterschiedliche Lüftungsdüsen, Luftaustritte oder Lüftergehäuse bekannt, die am Ende eines Lüftungsschachtes in einem Kraftfahrzeug angeordnet und dem Fahrzeuginnenraum zugewandt sind.

Die EP 0551883 M1 beschreibt einen Luftaustritt für Kraftfahrzeuge mit Luftleitflächen in modularer Struktur. Der bekannte Luftaustritt umfasst einen Hohlkörper, durch den die von dem Lüftungsschacht kommende Luft strömt, und zwei Reihen von Leitflächen, die in der Art von Lamellen ausgebildet sind. In der ersten Reihe erstrecken sich die Leitflächen vertikal, während sich die Leitflächen der zweiten Reihe in horizontaler Richtung erstrecken. Alle Leitflächen können um ihre Längsachse verschwenkt werden, so dass die Strömungsrichtung verändert und der Luftdurchsatz reguliert werden kann. Die Leitflächen jeder Reihe können synchron zueinander verschwenkt werden. Um das Verschwenken der Leitflächen manuell vornehmen zu können, ist ein Betätigungsknopf vorgesehen, der seitlich der auslassseitigen Öffnung des bekannten Luftaustrittes angeordnet ist. Der Betätigungsknopf kann in einer Ebene bewegt werden und ist über ein Gestänge sowohl mit der ersten als auch mit der zweiten Reihe der Leitflächen verbunden, so dass die Leitflächen der ersten und zweiten Reihe gleichzeitig durch den einen Betätigungsknopf verschwenkt werden können.

Die DE 10117420 A1 beschreibt ein Lüftergehäuse für einen Lüftungsschacht in einem Kraftfahrzeug. Das bekannte Lüftergehäuse weist einen Gehäusekörper auf, dessen hinterer Teil am Ende eines Lüftungsschachtes angebracht werden kann, während eine Auslassöffnung ins Fahrzeuginnere weist. Vor der Auslassöffnung sind mehrere parallel zueinander angeordnete Klappen vorgesehen, die um ihre Längsachse verschwenkt werden können, wobei die Klappen derart miteinander gekoppelt sind, dass sich diese stets synchron zueinander bewegen. Um die Klappen manuell verschwenken zu können, ist seitlich der Auslassöffnung ein mit den Klappen verbundenes Stellrad vorgesehen, dessen Rand teilweise aus dem Gehäusekörper herausragt, so dass dieses durch den Finger des Fahrers betätigt bzw. rotiert werden kann. An dem Stellrad ist ferner ein Schleifer angeordnet, der gegen eine feststehende Leiterplatte gedrückt ist. Leiterplatte und Schleifer sind dabei derart ausgebildet, dass in bestimmten Positionen des Stellrades vorbestimmte Spannungswerte ausgegeben werden, die Auswertschaltungen zugeführt werden, um bestimmte Steuerfunktionen zu erfüllen. Hierzu gehört beispielsweise eine Sichtanzeige, die die jeweilige Stellung des Stellrades signalisiert.

Der oben beschriebene Luftaustritt wie auch das bekannte Lüftergehäuse hat den Nachteil, dass dieser viel Platz auf einem Armaturenbrett oder einem anderen Bauteil des Kraftfahrzeuges einnimmt. Dies ist unter anderem darauf zurückzuführen, dass der Betätigungsknopf bzw. das Stellrad seitlich der Auslassöffnung angeordnet ist, so dass die bekannten Lüftungsdüsen sehr breit ausfallen. Vorteilhafter sind in diesem Zusammenhang die im folgenden beschriebenen Lüftungsdüsen.

So offenbart die DE 20316175 U1 eine Luftdüse für den Auslass eines Luftstromes aus einem Luftzuführschacht, in deren Gehäuse verschwenkbare Horizontallamellen sowie verschwenkbare Vertikallamellen vorgesehen sind. Wie auch beim vorbeschriebenen Stand der Technik sind die Horizontallamellen mit den Vertikallamellen gekoppelt, so dass diese über ein einziges Betätigungselement gleichzeitig verschwenkt werden können. Im Gegensatz zu den vorherigen Lösungen ist das Betätigungselement jedoch verschiebbar und verschwenkbar an einer der Horizontallamellen angeordnet. Ein im Wesentlichen identischer Luftaustritt ist auch aus der EP 0551882 B1 bekannt.

Bei diesem Stand der Technik ist das Betätigungselement demnach nicht seitlich der Auslassöffnung angeordnet, was eine kleinere Dimensionierung der gesamten Luftdüse bzw. des gesamten Luftsaustrittes ermöglicht, so dass mehr Platz für andere Betätigungselemente auf dem Armaturenbrett verbleibt. Trotz der Vorteile gegenüber dem eingangs beschriebenen Stand der Technik, haben die aus der DE 20316175 U1 und der EP 0551882 B1 bekannten Lüftungsdüsen noch immer den Nachteil, dass diese nicht derart an dem Armaturenbrett o.ä. angeordnet werden können, dass ausreichend Platz für Betätigungselemente anderer Fahrzeugkomponenten, wie beispielsweise die Fahrzeugheizung, die Lichtanlage, die Rückscheibenheizung usw., verbleibt, worunter auch die Übersichtlichkeit des Armaturenbrettes leidet.

Es ist daher eine Aufgabe der Erfindung, eine Lüftungsdüse für einen Lüftungsschacht in einem Kraftfahrzeug mit einem an dem Lüftungsschacht anbringbaren Düsengehäuse mit einer einlassseitigen und einer auslassseitigen Öffnung zu schaffen, die in einer Weise an einem Armaturenbrett o.ä. angeordnet werden kann, dass ausreichend Platz für Betätigungselemente anderer steuerbarer Fahrzeugkomponenten verbleibt. Ferner liegt der Erfindung die Aufgabe zu Grunde, ein Kraftfahrzeug mit einer solchen Lüftungsdüse zu schaffen.

Die Lösung der Aufgabe erfolgt an Hand der Merkmale des Patentanspruches 1 bzw. 14. Vorteilhafte Ausführungsformen der Erfindung sind Gegenstand der Unteransprüche.

Die erfindungsgemäße Lüftungsdüse für einen Lüftungsschacht in einem Kraftfahrzeug weist ein Düsengehäuse auf, das an dem Lüftungsschacht angebracht werden kann. Das Düsengehäuse ist mit einer einlassseitigen Öffnung und einer auslassseitigen Öffnung versehen. Unter einlassseitiger Öffnung ist hierbei die Öffnung zu verstehen, in die der Luftstrom eintritt, wohingegen die auslassseitige Öffnung diejenige Öffnung ist, durch die der Luftstrom wieder austritt. Erfindungsgemäß ist ein ringförmiges Stellglied zum Einstellen einer anderen steuerbaren Fahrzeugkomponente vorgesehen. Unter einer anderen steuerbaren Fahrzeugkomponente ist jede steuerbare Fahrzeugkomponente außer der Lüftungsdüse selbst zu verstehen, wie beispielsweise die Fahrzeugheizung, die Sitzheizung, die Heckscheibenheizung, die Beleuchtungsanlage o.ä. Das ringförmige Stellglied kann um die auslassseitige Öffnung rotiert werden.

Auf diese Weise wird die Lüftungsdüse in platzsparender Weise mit dem Stellglied für eine andere Fahrzeugkomponente kombiniert, so dass dieses Stellglied keinen weiteren Platz auf dem Armaturenbrett benötigt. Somit ist auch eine größere Übersichtlichkeit des Armaturenbrettes o.ä. gegeben. Das ringförmige Stellglied kann dabei vorteilhafterweise von dem Zierring gebildet werden, der die Auslassöffnungen bei Lüftungsdüsen klassischerweise umgibt, wodurch darüber hinaus auch eine Reduzierung der Bauteile erzielt wird.

Um eine besonders platzsparende Anordnung zu erzielen, ist die auslassseitige Öffnung in einer bevorzugten Ausführungsform der erfindungsgemäßen Lüftungsdüse kreisförmig ausgebildet, während das ringförmige Stellglied kreisringförmig ausgebildet ist.

In einer weiteren bevorzugten Ausführungsform der erfindungsgemäßen Lüftungsdüse sind Mittel zur Visualisierung der Rotationsstellung des ringförmigen Stellgliedes an dem Stellglied vorgesehen. Diese Mittel können beispielsweise eine Sichtanzeige in Form eines Displays zur Wiedergabe der Rotationsstellung oder auch einfache Markierungen umfassen, an Hand derer die Rotationsstellung ablesbar ist.

Um eine besonders einfache und somit kostengünstige Lüftungsdüse zur Verfügung stellen zu können, umfassen die Mittel zur Visualisierung der Rotationsstellung des ringförmigen Stellgliedes in einer besonders bevorzugten Ausführungsform der Erfindung eine oder mehrere Markierungen an dem ringförmigen Stellglied. Derartige Markierungen können beispielsweise die Form einer Skalierung haben oder auch als einfache Pfeilmarkierung ausgebildet sein, wobei letztere geeignet ist, auf eine entsprechende Skalierung an einem stationären Teil der Lüftungsdüse oder des Armaturenbrettes zu weisen.

In einer weiteren bevorzugten Ausführungsform der erfindungsgemäßen Lüftungsdüse sind Übertragungsmittel zur Übertragung der Rotationsstellung des ringförmigen Stellgliedes an eine Steuereinrichtung der anderen steuerbaren Fahrzeugkomponente vorgesehen. So können beispielsweise Leiterbahnen einerseits und Schleifkontakte andererseits vorgesehen sein, über die eine Spannung abgegriffen wird, wobei je nach Rotationsstellung des ringförmigen Stellgliedes gegenüber einem stationären Teil der Lüftungsdüse oder einem Teil des Armaturenbrettes andere Spannungswerte an die Steuereinrichtung weitergegeben werden, wobei vorbestimmte Spannungswerte für vorbestimmte Rotationsstellungen vorgesehen sind. Allerdings sind hier auch andere Meßmethoden zur Messung der Rotationsstellung denkbar.

In einer besonders bevorzugten Ausführungsform der Erfindung ist die andere steuerbare Fahrzeugkomponente, die durch das Stellglied eingestellt werden soll, die Beleuchtungsanlage des Kraftfahrzeuges. So sind bei herkömmlichen Kraftfahrzeugen die Stellglieder für die Beleuchtungsanlage häufig in dem Bereich des Armaturenbrettes anzufinden, der den Knieaufprallbereich bildet. Damit kommt es vor, dass die herkömmlichen Stellglieder ungewollt mit dem Knie betätigt werden. Dies wird durch die vorstehend genannte, bevorzugte Ausführungsform der Erfindung ausgeschlossen.

Vorteilhafterweise kann das ringförmige Stellglied in eine erste Rotationsstellung rotiert werden, in der die Beleuchtungsanlage ausgeschaltet ist, in eine zweite Rotationsstellung rotiert werden, in der das Parklicht der Beleuchtungsanlage eingeschaltet ist, in eine dritte Rotationsstellung rotiert werden kann, in der das Abblendlicht der Beleuchtungsanlage eingeschaltet ist und in eine vierte Rotationsstellung rotiert werden, in der das Fernlicht der Beleuchtungsanlage eingeschaltet ist.

Um zu gewährleisten, dass der aus der Lüftungsdüse austretende Luftstrom in verschiedene Bereiche des Fahrzeuginnenraumes strömen und auch reguliert werden kann, ist in dem Düsengehäuse bei einer vorteilhaften Ausführungsform der Erfindung mindestens eine Lamelle zur Regulierung und/oder Leitung des Luftstromes vorgesehen, die verschwenkt werden kann. Durch Verschwenken der Lamelle kann somit eine Schrägstellung derselben gegenüber dem Luftstrom erzielt werden, um den Luftstrom umzuleiten. Auch kann der Luftstrom durch entsprechende Verengung der auslassseitigen Öffnung in Folge des Verschwenkens der Lamelle reduziert und somit reguliert werden.

Damit der austretende Luftstrom sowohl zu den Seiten als auch nach oben und unten gelenkt werden kann, sind in einer bevorzugten Ausführungsform der Erfindung mehrere Horizontal- und Vertikallamellen vorgesehen, die verschwenkt werden können. Diese können den bereits aus dem Stand der Technik bekannten Aufbau haben.

Um ein einfaches manuelles Verschwenken der Lamellen zu ermöglichen ist in einer weiteren vorteilhaften Ausführungsform ein Betätigungsorgan zum Einstellen der Schwenkstellungen der Lamellen vorgesehen.

Vorteilhafterweise ist ein Bewegungskopplungselement vorgesehen, so dass die Schwenkstellung von Horizontal- und Vertikallamellen gleichzeitig mit dem Betätigungsorgan eingestellt werden kann.

Um zu gewährleisten, dass die erfindungsgemäße Lüftungsdüse platzsparend angeordnet werden kann, ist das Betätigungsorgan nicht seitlich bzw. neben der auslassseitigen Öffnung angeordnet, sondern im Bereich der auslassseitigen Öffnung.

Besonders bevorzugt ist es in diesem Zusammenhang, wenn das Betätigungsorgan an einer der Lamellen angeordnet ist.

Das erfindungsgemäße Kraftfahrzeug weist mindestens einen Lüftungsschacht auf, an dem eine Lüftungsdüse der erfindungsgemäßen Art angebracht ist, wobei bezüglich der Vorteile eines solchen Kraftfahrzeuges auf die oben stehenden Vorteile der erfindungsgemäßen Lüftungsdüse als solcher verwiesen sein soll.

Die Erfindung wird im Folgenden an Hand eines Ausführungsbeispieles unter Bezugnahme auf die zugehörigen Zeichnungen näher erläutert. Es zeigt:
- Fig. 1: eine Draufsicht auf eine Ausführungsform der erfindungsgemäßen Lüftungsdüse für ein Kraftfahrzeug mit einem Lüftungsschacht und
- Fig. 2: eine Seitenansicht der Lüftungsdüse von Fig.1.

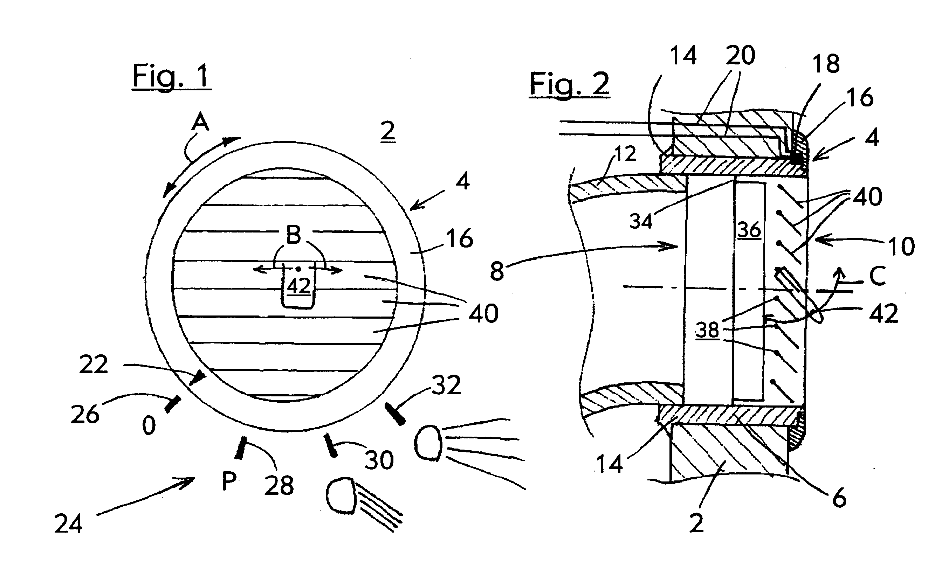

Die Fig. 1 und 2 zeigen ein schematische Darstellung einer Ausführungsform der erfindungsgemäßen Lüftungsdüse. Beide Figuren zeigen eine bereits in ein Armaturenbrett 2 eingesetzte Lüftungsdüse 4.

Die Lüftungsdüse 4 weist ein Düsengehäuse 6 auf, das in der vorliegenden Ausführungsform im wesentlichen rohrartig ausgebildet ist. Das Düsengehäuse 6 weist an seinem in den Innenraum des Armaturenbrettes 2 weisenden Ende eine einlassseitige Öffnung 8 und an seinem in den Fahrzeuginnenraum weisenden Ende eine auslassseitige Öffnung 10 auf. Die einlassseitige Öffnung 8 ist mit einem Lüftungsschacht 12 verbunden, der im vorliegenden Beispiel als Schlauch ausgebildet ist. Im Bereich der einlassseitigen Öffnung 8 weist das Düsengehäuse 6 ferner radial nach außen stehende Vorsprünge 14 auf, die das Armaturenbrett 2 hintergreifen und somit eine sichere Befestigung der Lüftungsdüse 4 an dem Armaturenbrett 2 gewährleisten. Die auslassseitige Öffnung 10 ist kreisrund ausgebildet.

Um die auslassseitige Öffnung 10 ist ein ringförmiges Stellglied 16 angeordnet, das die Form eines Kreisringes aufweist. Das ringförmige Stellglied 16, das hier auch als Zierring für die Lüftungsdüse 4 fungiert, kann um die auslassseitige Öffnung 10 rotiert werden, wie dies in Fig. 1 an Hand des Pfeiles A dargestellt ist. Mit Hilfe des ringförmigen Stellgliedes 16 kann eine andere, nicht näher dargestellte steuerbare Fahrzeugkomponente eingestellt werden. Im dargestellten Beispiel soll es sich bei der steuerbaren Fahrzeugkomponente um die Beleuchtungsanlage des Kraftfahrzeuges handeln.

Um ein Einstellen der Beleuchtungsanlage zu ermöglichen, sind zwischen dem ringförmigen Stellglied 16 und dem Düsengehäuse 6 Messmittel 18 vorgesehen, die in Abhängigkeit von der Rotationsstellung des ringförmigen Stellgliedes 16 in Relation zu dem Düsengehäuse 6 eine Spannung liefern, die über die Übertragungsmittel 20 an eine nicht näher dargestellte Steuereinrichtung der Beleuchtungsanlage übertragen werden kann. Die Übertragungsmittel 20 werden in diesem Beispiel von zwei Kabeln gebildet, an denen ein Spannungswert abgegriffen werden kann, der zu einer vorbestimmten Rotationsstellung gehört.

An der dem Fahrzeuginnenraum und somit den Insassen zugewandten Seite des ringförmigen Stellgliedes 16 sind Mittel zur Visualisierung der Rotationsstellung des Stellgliedes 16 vorgesehen. Diese umfassen eine Markierung 22 in Form eines radial nach außen weisenden Pfeiles. Ferner ist eine Skalierung 24 an dem Armaturenbrett 2 vorgesehen, auf die die pfeilförmige Markierung 22 weist. Das ringförmige Stellglied 16 kann im wesentlichen vier Rotationsstellungen einnehmen. In einer ersten Rotationsstellung 26, die in Fig. 1 gezeigt ist, wird über die Übertragungsmittel 20 ein Spannungswert übertragen, der die Steuereinrichtung der Beleuchtungsanlage dazu veranlasst, alle Lichter auszuschalten. In einer zweiten Rotationsstellung 28 wird über die Übertragungsmittel 20 ein Spannungswert übertragen, der die Steuereinrichtung der Beleuchtungsanlage dazu veranlasst, das Parklicht einzuschalten. In einer dritten Rotationsstellung 30 wird über die Übertragungsmittel 20 ein Spannungswert übertragen, der die Steuereinrichtung der Beleuchtungsanlage dazu veranlasst, das Abblendlicht einzuschalten. In der vierten Rotationsstellung 32 wird über die Übertragungsmittel 20 ein Spannungswert übertragen, der die Steuereinrichtung der Beleuchtungsanlage dazu veranlasst, das Fernlicht einzuschalten. Durch entsprechendes Zurückdrehen des ringförmigen Stellgliedes 16 kann dieses wieder in die erste Rotationsstellung 26 zurückgebracht werden, in der die Markierung 22 wieder auf den Wert "0" der Skalierung 24 weist und die Beleuchtungsanlage ausgeschaltet ist.

In dem Düsengehäuse 6 sind mehrere um jeweils eine senkrechte Achse 34 verschwenkbare Vertikallamellen 36 sowie mehrere um jeweils eine waagerechte Achse 38 verschwenkbare Horizontallamellen 40 angeordnet, die der Umleitung des Luftstromes sowie dessen Regulierung dienen. Die Schwenkstellungen der Vertikal- und Horizontallamellen 36, 40 können über ein Betätigungsorgan 42 eingestellt werden. Dabei ist ein nicht näher dargestelltes Bewegungskopplungselement vorgesehen, so dass die Schwenkstellung von Vertikal- und Horizontallamellen 36, 40 gleichzeitig mit nur dem einen Betätigungsorgan 42 eingestellt werden kann. Wie aus den Figuren ersichtlich, ist das Betätigungsorgan 42 im Bereich der auslassseitigen Öffnung 10 der Lüftungsdüse 4 platzsparend angeordnet, indem es an einer der Horizontallamellen 40 angebracht ist. So kann das Betätigungsorgan 42 in horizontaler Richtung auf der Horizontallamelle 40 verschoben werden, wie dies an Hand des Pfeiles B in Fig. 1 veranschaulicht ist, wodurch die Vertikallamellen 36 über das Bewegungskopplungselement um ihre Achsen 34 verschwenkt werden. Gleichzeitig kann das Betätigungsorgan 42 um die Achse 38 der entsprechenden Horizontallamelle 40 verschwenkt werden, wie dies an Hand des Pfeiles C in Fig. 2 veranschaulicht ist, wodurch die Horizontallamellen 36 um ihre Achsen 38 verschwenkt werden.

Durch die erfindungsgemäße Kombination des Stellgliedes 16 für die Beleuchtungsanlage mit der Lüftungsdüse 4 sowie der Anordnung des Betätigungsorganes im Bereich bzw. vor der auslassseitigen Öffnung 10 wird auf dem Armaturenbrett 2 Platz geschaffen, der für weitere Betätigungselemente oder -organe dringend benötigt wird. Auf diese Weise ist auch sichergestellt, dass keine Betätigungsorgane im Knieaufprallbereich angeordnet werden müssen.

### Bezugszeichenliste

- 2: Armaturenbrett
- 4: Lüftungsdüse
- 6: Düsengehäuse
- 8: Einlassseitige Öffnung
- 10: Auslassseitige Öffnung
- 12: Lüftungsschacht
- 14: Vorsprünge
- 16: Ringförmiges Stellglied
- 18: Messmittel
- 20: Übertragungsmittel
- 22: Markierung
- 24: Skalierung
- 26: Erste Rotationsstellung
- 28: Zweite Rotationsstellung
- 30: Dritte Rotationsstellung
- 32: Vierte Rotationsstellung
- 34: Achsen der Vertikallamellen
- 36: Vertikallamellen
- 38: Achsen der Horizontallamellen
- 40: Horizontallamellen
- 42: Betätigungsorgan

## Patentansprüche

1. Lüftungsdüse für einen Lüftungsschacht in einem Kraftfahrzeug mit einem an dem Lüftungsschacht (12) anbringbaren Düsengehäuse (6) mit einer einlassseitigen und einer auslassseitigen Öffnung (8; 10),
**dadurch gekennzeichnet, dass** ein um die auslassseitige Öffnung (10) rotierbares, ringförmiges Stellglied (16) zum Einstellen einer anderen steuerbaren Fahrzeugkomponente vorgesehen ist.

2. Lüftungsdüse nach Anspruch 1, **dadurch gekennzeichnet, dass** die auslassseitige Öffnung (10) kreisförmig und das ringförmige Stellglied (16) kreisringförmig ausgebildet ist.

3. Lüftungsdüse nach einem der Ansprüche 1 oder 2, **dadurch gekennzeichnet, dass** Mittel zur Visualisierung der Rotationsstellung des ringförmigen Stellgliedes (16) an dem ringförmigen Stellglied (16) vorgesehen sind.

4. Lüftungsdüse nach einem der Ansprüche 1 bis 3, **dadurch gekennzeichnet, dass** die Mittel zur Visualisierung der Rotationsstellung des ringförmigen Stellgliedes (16) eine oder mehrere Markierungen (22) an dem ringförmigen Stellglied (16) umfassen.

5. Lüftungsdüse nach einem der Ansprüche 1 bis 4, **dadurch gekennzeichnet, dass** Übertragungsmittel (20) zur Übertragung der Rotationsstellung des ringförmigen Stellgliedes (16) an eine Steuereinrichtung der anderen steuerbaren Fahrzeugkomponente vorgesehen sind.

6. Lüftungsdüse nach einem der vorangehenden Ansprüche, **dadurch gekennzeichnet, dass** die andere steuerbare Fahrzeugkomponente die Beleuchtungsanlage des Kraftfahrzeuges ist.

7. Lüftungsdüse nach Anspruch 6, **dadurch gekennzeichnet, dass** das ringförmige Stellglied (16) in eine erste Rotationsstellung (26) rotierbar ist, in der die Beleuchtungsanlage ausgeschaltet ist, in eine zweite Rotationsstellung (28) rotierbar ist, in der das Parklicht der Beleuchtungsanlage eingeschaltet ist, in eine dritte Rotationsstellung (30) rotierbar ist, in der das Abblendlicht der Beleuchtungsanlage eingeschaltet ist in eine vierte Rotationsstellung (32) rotierbar ist, in der das Fernlicht der Beleuchtungsanlage eingeschaltet ist.

8. Lüftungsdüse nach einem der vorangehenden Ansprüche, **dadurch gekennzeichnet, dass** in dem Düsengehäuse (6) mindestens eine verschwenkbare Lamelle zur Regulierung und/oder Leitung des Luftstromes vorgesehen ist.

9. Lüftungsdüse nach Anspruch 8, **dadurch gekennzeichnet, dass** mehrere verschwenkbare Horizontal- und Vertikallamellen (40; 36) vorgesehen sind.

10. Lüftungsdüse nach einem der Ansprüche 8 oder 9, **dadurch gekennzeichnet, dass** ein Betätigungsorgan (42) zum Einstellen der Schwenkstellungen der Lamellen (40; 36) vorgesehen ist.

11. Lüftungsdüse nach Anspruch 10, **dadurch gekennzeichnet, dass** ein Bewegungskopplungselement vorgesehen ist, so dass die Schwenkstellung von Horizontal- und Vertikallamellen (40; 36) gleichzeitig mit dem Betätigungsorgan (42) einstellbar ist.

12. Lüftungsdüse nach einem der Ansprüche 10 oder 11, **dadurch gekennzeichnet, dass** das Betätigungsorgan (42) im Bereich der auslassseitigen Öffnung (10) angeordnet ist.

13. Lüftungsdüse nach Anspruch 12, **dadurch gekennzeichnet, dass** das Betätigungsorgan (42) an einer der Lamellen (40) angeordnet ist.

14. Kraftfahrzeug mit mindestens einem Lüftungsschacht, an dem eine Lüftungsdüse (4) nach einem der Ansprüche 1 bis 16 angebracht ist.
